# EUROPÄISCHE PATENTANMELDUNG

(11) **EP 2 821 773 A1**
(43) Veröffentlichungstag der Anmeldung: **07.01.2015**
(21) Anmeldenummer: 14002128.8
(22) Anmeldetag: 20.06.2014
(51) Int. Cl.: G01N 5/04, B01L 9/06, G01N 35/00

(54) **Verfahren und Magazin zum Vorhalten, Transport, Verarbeiten und Archivieren von thermoanalytischer Proben**

(30) Priorität: 05.07.2013 DE 102013107101
(71) Anmelder: Netzsch Gerätebau GmbH, 95100 Selb (DE)
(72) Erfinder: Schindler, Alexander, 95191 Leupoldsgrün (DE); Moukhina, Elena, 95100 Selb (DE); Gebhardt, Michael, 95100 Selb (DE); Preuss, Rolf, 37574 Einbeck (DE); Knappe, Stephan, 95182 Döhlau (DE); Meyer, Markus, 86678 Ehingen (DE); Schmoelzer, Stefan, 95188 Issigau (DE); Kaiser, Gabriele, 95100 Selb (DE); Strobel, Andreas, 08209 Auerbach (DE); Lauterbach, Stefan, 95100 Selb (DE); Frenzl, Alexander, 95173 Schönwald (DE); Hilpert, Thilo, 95100 Selb (DE); Nijmeh, André, 96117 Merkendorf (DE); Herr, Gunther, 96253 Haarth (DE); Gradl, Matthias, 96145 Seßlach (DE); Hollering, Markus, 95632 Wunsiedel (DE); Schaefer, Otto Max, 95100 Selb (DE); Blumm, Jürgen, 95100 Selb (DE); Denner, Thomas, 95100 Selb (DE)

(57) **Zusammenfassung**

Es sind ein Verfahren und eine Vorrichtung zum Vorhalten, Transportieren, Verarbeiten und Archivieren von thermoanalytischen Proben offenbart. Die Probenbehälter, in welche die zu untersuchenden thermoanalytischen Proben eingebracht werden sollen, werden in einem Magazin bereitgestellt.

## Beschreibung

Die vorliegende Erfindung betrifft ein Verfahren und eine Magazin zum Vorhalten, Transportieren, Verarbeiten und Archivieren von thermoanalytischen Proben.

Die US-Patentanmeldung 2013/0105677 A1 offenbart einen Probenträger für die Verwendung bei mineralogischen Proben in der Laserspektroskopie. Der Probenhalter besteht aus einer Basisplatte, auf welcher eine Referenzprobe fest angeordnet ist. Weiterhin ist der Probenhalter an seiner Basis mit einer festen Anzahl von Probenplätzen versehen, an welchen die zu messenden Proben für die Analyse eingebracht werden können. Wenn die Proben auf der Basis des Probenhalters platziert sind, wird ein Deckel oberhalb der Proben positioniert, welcher anschließend mit einem Befestigungselement fest und lösbar mit dem Probentablett verbunden wird. Im Deckel des Probenhalters sind Öffnungen vorgesehen, durch welche die Proben vermessen werden können. Für die Messung selber wird der Probenträger gedreht und mit dem Deckel nach unten in ein entsprechendes Messgerät eingeführt.

Die deutsche Gebrauchsmusterschrift DE 20 2007 002 324 U1 offenbart eine Vorrichtung zur thermoanalytischen Messung mit einem Probenmagazin mit mehreren Probenaufnahmen einer regelbaren Temperiereinrichtung einer in der Messkammer angeordneten Messaufnahme und einer Steuer- und/oder Regeleinheit. Besonderes Merkmal dieses Gebrauchsmusters ist, dass mindestens eine Probenaufnahme mit einer regelbaren Temperiervorrichtung zusammenwirkt.

Vorrichtungen für die thermoanalytische Untersuchung sind beispielsweise Kalorimeter, welche nach dem Differentialscanningprinzip (DSC) oder nach Prinzip der Power- Kompensation arbeiten sowie Geräte für die thermogravimetrische, die thermomechanische, die dynamisch mechanische oder die elektrische Analyse (TGA, TMA, DMA oder DEA). Diese Vorrichtungen können sowohl mit Einzelproben als auch in Kombination mit einem Probenmagazin mit mehreren Probenaufnahmen betrieben werden. Probenmagazine werden insbesondere in runder oder quadratischer Bauform für die Messung von mehreren Proben oder die automatisierte Messung verwendet. Die Vorrichtungen und Geräte, die für thermoanalytische Messungen und Untersuchungen verwendet werden sowie die wissenschaftlichen Prinzipien und Methoden, auf denen sie beruhen, sind prinzipiell aus dem Stand der Technik bekannt und werden hier nicht weiter behandelt.

Der Erfindung liegt die Aufgabe zugrunde, ein Verfahren zum ökonomischen und betriebssicheren Bereitstellen, Analysieren und Archivieren von thermoanalytischen Proben bereitzustellen.

Die obige Aufgabe wird durch ein Verfahren gelöst, das die Merkmale des Anspruchs 1 umfasst. Weitere vorteilhafte Merkmale sind den Unteransprüche zu entnehmen.

Weiterhin liegt der Erfindung die Aufgabe zugrunde ein Magazin bereitzustellen, mit welcher Proben für thermoanalytische Untersuchungen ökonomisch und betriebssicher breitstellbar, analysierbar und archivierbar sind.

Die obige Aufgabe wird durch ein Magazin gelöst, die die Merkmale des Anspruchs 7 umfasst. Weitere vorteilhafte Merkmale sind den Unteransprüche zu entnehmen.

Es ist ein Verfahren zum Vorhalten, Transportieren, Verarbeiten und Archivieren von thermoanalytischen Proben offenbart. Die Probenbehälter, in welche die zu untersuchenden thermoanalytischen Proben eingebracht werden sollen, werden in einem Magazin bereitgestellt. Zum Bestücken der Probenbehälter mit entsprechendem Probenmaterial werden die Probenbehälter aus dem Magazin entnommen. Anschließend wird in jeden Probenbehälter eine Probe aufgegeben. Die Daten der zu untersuchenden thermoanalytischen Proben werden in ein elektronisches und/oder ein analoges Datenverzeichnis für das Magazin eingetragen. Jedem Probenbehälter, der mit einer Probe befüllt wurde, wird ein fester Platz im Magazin zugewiesen. Zum Transport wird das Magazin mit einer Transportsicherung fest verschlossen. In einer bevorzugten Ausführungsform handelt es sich bei der Transportsicherung um einen Deckel, der fest, jedoch lösbar mit dem Magazin verbunden werden kann. Zur weiteren Verarbeitung beziehungsweise zum Analysieren der Probe wird das wieder geöffnete Magazin in ein Messgerät zur thermischen Analyse eingebracht. Nach dem Einbringen des Magazins in das Messgerät wird über Erfassungsmittel das Magazin identifiziert. Bei der Identifikation werden die Daten von dem Datenverzeichnis des Magazins mit dem Erfassungsmittel ausgelesen, hierbei wird gleichzeitig die Position eines jeden Probenbehälters an das Messgerät übertragen. Anschließend wird jede Probe mit samt dem Probenbehälter automatisch aus dem Magazin entnommen und der jeweiligen Messung zugeführt. Nach Beendigung der Messung wird jede Probe zusammen mit dem jeweiligen Probenbehälter wieder automatisch in das Magazin zurücküberführt. Nach Beendigung aller Messungen werden die Proben inklusive der Probenbehälter zusammen mit dem Magazin archiviert.

Für einen Fachmann auf dem Gebiet der thermischen Analyse ist klar, dass die Proben, beziehungsweise die Probenbehälter, auch manuell durch den Bediener aus dem Magazin entnommen und der Messung zugeführt werden können. Nach Abschluss der Messung würden die Proben, beziehungsweise die Probenbehälter, manuell durch den Bediener in das Magazin einsortiert.

Das Magazin ist in jedem Fall zweifelsfrei identifizierbar, wobei die Identifikation über ein Erfassungsmittel durchgeführt wird. Die eigentliche Identifizierung des Magazins kann automatisch durch ein Erfassungsmittel am Messgerät oder manuell durch den Bediener vorgenommen werden. Mit dem Erfassungsmittel können RFID-Chips, 2D-Codes, Barcodes oder Textfelder ausgelesen werden. Für eine genaue Identifizierung ist es für den Bediener notwendig, die Daten der jeweiligen Proben entweder über ein Datenverarbeitungssystem zum Beispiel auf den RFID-Chip aufzuspielen oder die Daten über eine Datenbank für das Auslesen des Barcodes zugänglich zu machen. Bei der Verwendung des vorab beschriebenen Textfeldes handelt es sich um ein Faltbuch, welches der Umverpackung des Magazins beigefügt ist. Dieses Faltbuch enthält Zeilen und Spalten, in denen zu jedem Probenbehälter die genauen Daten einer jeden Probe eingetragen werden können.

Vor der ersten Verwendung, sprich nach der Auslieferung des Magazins, befindet sich auf jeder Position ein leerer Probenbehälter mit einem zugehörigen Deckel. In einer bevorzugten Ausführungsform wurden jeder Probenbehälter und jeder Deckel vor der Bestückung des Magazins vorgewogen und die Daten des jeweiligen Probenbehälters bzw. des zugehörigen Deckels wurden erfasst und können über das Erfassungsmittel des Messgerätes ausgelesen werden. In weiteren Ausführungsformen, können verschiedenen Positionen des Magazins leer bleiben. Weiterhin ist es möglich, dass sich an einer Position nur ein Probenbehälter oder nur ein Deckel befindet. Es ist auch möglich, dass jeweils ein Probenbehälter und ein Deckel paarweise nebeneinander angeordnet sind. Der Probenbehälter kann, zum Bestücken mit einer Probe, aus dem Magazin entnommen und wieder eingesetzt werden. Anschließend wird der zugehörige Deckel auf dem Probenbehälter positioniert. Dies hat den Vorteil, dass die sehr dünnen und zur Verformung neigenden Deckel nicht unnötig oft bewegt werden müssen.

Weiterhin ist ein Magazin zum Vorhalten, Transportieren, Verarbeiten und Archivieren von thermoanalytischen Proben offenbart. Das Magazin besitzt eine vorgegebene Rasterung, wodurch die Position eines jeden Probebehälters, inklusiv seines Deckels, bekannt ist. Zusätzlich besitzt das Magazin eine Transportsicherung, mit der das Magazin zum Transportieren und/oder zum Archivieren fest verschlossen werden kann. An einer Stirnseite des Magazins ist ein Erfassungsmittel angebracht, durch welches das Magazin zweifelsfrei identifizierbar ist. Das Magazin ist mit einer Umverpackung versehen, wobei diese Umverpackung dem Magazin zweifelsfrei zugeordnet ist. Diese zweifelsfreie Zuordnung der Umverpackung zu dem jeweiligen zugehörigen Magazin ist für die Verwendung als Archivierungsmittel sehr wichtig. Durch die feste Zusammenführung des Magazins und der Umverpackung ist es im Archiv möglich, von außen bereits festzustellen, welches Magazin bzw. welche Proben sich in der jeweiligen Verpackung befinden. Die Umverpackung ist mit einem Datenverzeichnis für die Probendaten versehen. Dieses Datenverzeichnis ist in der Regel als Faltbuch oder als RFID-Chip ausgestaltet. Das an der Umverpackung befindliche Faltbuch ist dem Fachmann auch als Leporello bekannt. In dieses Faltbuch lassen sich die Daten der Proben eintragen, wobei das Faltbuch immer fest mit der Umverpackung verbunden ist.

Das Magazin ist lösbar mit der Umverpackung verbunden, wobei die lösbare Verbindung zwischen Magazin und Umverpackung als Stecksystem oder als Klebeverbindung ausgestaltet ist. Bei der Verwendung eines Stecksystems wird das Magazin in die Umverpackung hineingeschoben. Durch Stege, die sich oberhalb des Magazins bzw. oberhalb der Transportsicherung befinden, wird das Magazin fest in der Umverpackung arretiert.

Für den Fachmann ist es auch möglich, das Magazin durch Klebepunkten in der Umverpackung zu fixieren. Nach der Verwendung des Magazins in einem Messgerät ist es später auch möglich, das Magazin wieder in der Umverpackung festzukleben. Aus dem Stand der Technik sind viele Vorrichtungen und Verfahren bekannt, mit denen Magazine in einer Umverpackung lösbar fixiert werden können. Somit stellen die zwei vorab beschriebenen Möglichkeiten keine Einschränkung des Schutzbereiches dar.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt ein Messgerät für thermoanalytische Untersuchungen.
Fig. 2 zeigt ein erfindungsgemäßes Magazin.
Fig. 3 zeigt einen Probenbehälter mit Deckel, wie er im erfindungsgemäßen Magazin vorhanden ist.
Fig. 4 zeigt eine Umverpackung mit einem zugehörigen erfindungsgemäßen Magazin.

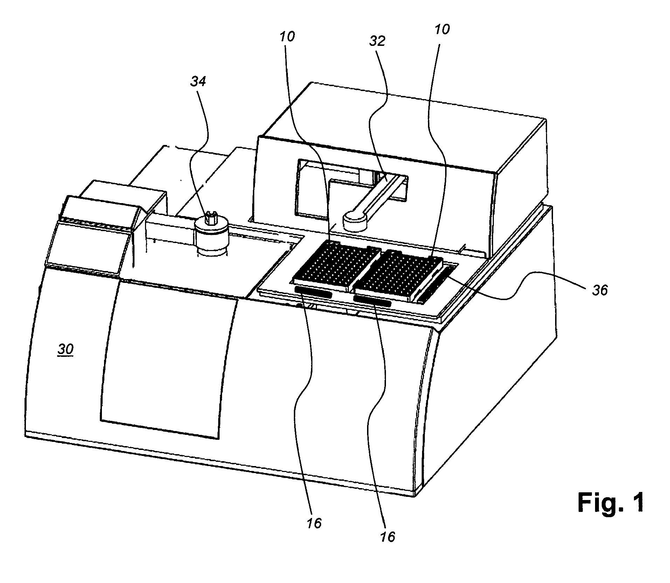

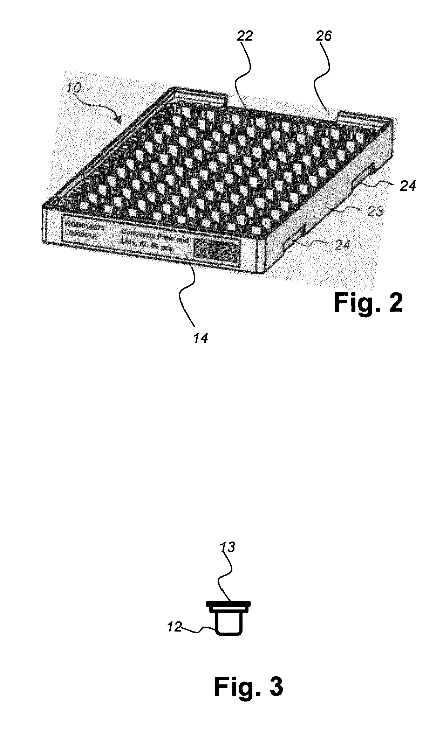

Die Figur 1 zeigt ein beliebiges Messgerät 30 für thermoanalytische Untersuchungen. Das Messgerät 30 ist mit einer Magazinablage 36 versehen, auf welcher in der gezeigten Ausführungsform zwei Magazine 10 angeordnet sind. Die Magazine 10 sind mit den Erfassungsmitteln 16 zweifelsfrei identifizierbar. Mit den Erfassungsmitteln 16 ist es möglich, die Daten von dem Datenverzeichnis des Magazins (nicht dargestellt) auszulesen und an das Messgerät 30 zu übertragen. Mittels der Entnahmevorrichtung 32 können einzelne Proben beziehungsweise Probenbehälter (nicht dargestellt) aus einem der Magazine 10 entnommen und in die Messkammer 34 eingebracht werden. Nach Beendigung der Messung werden die Proben bzw. Probenbehälter mit der Entnahmevorrichtung 32 wieder aus der Probenkammer 34 entnommen und dem jeweiligen Magazin 10 zugeführt. Hierbei ist es immer so, dass der entsprechende Probenbehälter auf die jeweilige Position zurückgestellt wird, die er vorher in den jeweiligen Magazin 10 eingenommen hat. Figur 2 zeigt ein erfindungsgemäßes Magazin 10, welches mit einer Vielzahl von Aufnahmen 22 für Probenbehälter (nicht dargestellt) versehen ist. Auf der Vorderseite ist ein Datenverzeichnis 14 für das jeweilige Magazin 10 zu erkennen. Über dieses Datenverzeichnis 14 ist das Magazin 10 zweifelsfrei identifizierbar. Auf der dem Datenverzeichnis 14 gegenüberliegenden Seite ist eine Aussparung 26 für die Transportsicherung (nicht dargestellt) eingebracht. In diese Aussparung 26 wird später die Transportsicherung eingeführt. An den Längsseiten 23 des Magazins 10 sind Arretierungen 24 angebracht. Mittels dieser Arretierungen 24 kann das Magazin 10 in einem Messgerät positioniert oder in einer Umverpackung (nicht dargestellt) fixiert werden.

Die Figur 3 zeigt einen Probenbehälter 12 mit Deckel 13, wie er in das erfindungsgemäße Magazin 10 eingebracht werden kann. Dieser Probenbehälter 12 sowie die zugehörigen Deckel 13 werden vor der Bestückung des Magazins 10 in der Produktion vorgewogen und dann einer festen Position im Magazin 10 zugeordnet. Die Daten eines jeden Probenbehälters 12 sowie des zugehörigen Deckels 13 werden im Datenverzeichnis 14 für das Magazin 10 festgehalten.

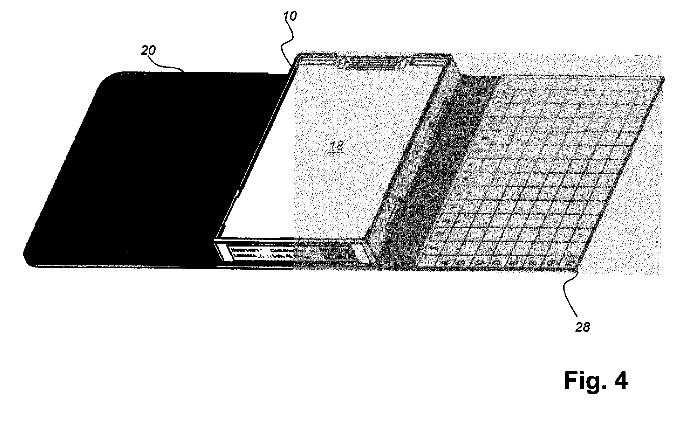

Die Figur 4 zeigt eine Umverpackung 20 mit ihrem zugehörigen Magazin 10. Weiterhin ist die Umverpackung 20 mit dem Datenverzeichnis 28 der Umverpackung 20 versehen. In dieses Datenverzeichnis 28 können die Daten der einzelnen Proben sowie eine genaue Identifizierung der jeweiligen Proben, die sich in dem zugehörigen Magazin 10 befinden, eingetragen werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichen

- 10: Magazin
- 12: Probenbehälter
- 13: Deckel
- 14: Datenverzeichnis für Magazin
- 16: Erfassungsmittel
- 18: Transportsicherung
- 20: Umverpackung
- 23: Längsseite
- 22: Aufnahme für Probenbehälter
- 24: Arretierung
- 26: Aussparung für Transportsicherung
- 28: Datenverzeichnis für Umverpackung
- 30: Messgerät
- 32: Entnahmevorrichtung
- 34: Messkammer
- 36: Magazinablage

## Patentansprüche

1. Verfahren zum Vorhalten, Transportieren, Verarbeiten und Archivieren von thermoanalytischen Proben, **gekennzeichnet durch** die folgenden Schritte:
a. dass Probenbehälter (10) für die thermoanalytischen Proben in einem Magazin (10) bereitgestellt werden;
b. dass die Probenbehälter (12) zum Bestücken, aus dem Magazin (10) entnommen werden;
c. dass je eine Probe in je einen Probenbehälter (12) gegeben wird;
d. dass Daten der Proben in ein elektronisches und/oder analoges Datenverzeichnis (14) für das Magazin (10) eingetragen werden;
e. dass jedem gefüllten Probenbehälter (12) ein fester Platz im Magazin (10) zugewiesen wird;
f. dass das Magazin (10) zum Transport fest verschlossen wird;
g. dass das wieder geöffnete Magazin (10) in ein Messgerät (30) zur thermischen Analyse eingebracht wird;
h. dass über Erfassungsmittel (16), das Magazin (10) identifiziert wird, wobei gleichzeitig die Position eines jeden Probenbehälters (12) bestimmt wird;
i. dass jede Probe zusammen mit dem jeweiligen Probenbehälter (12) automatisch oder manuell aus dem Magazin (10) entnommen und der jeweiligen Messung zugeführt wird;
j. dass jede Probe nach der Messung wieder in das Magazin (10) zurück überführt wird und
k. dass die Proben, nach Beendigung aller Messungen, zusammen mit dem Magazin (10) archiviert werden.

2. Verfahren nach Anspruch 1, wobei das Magazin (10) zweifelsfrei identifizierbar ist, wobei die Identifikation über das Erfassungsmittel (16) durchgeführt wird.

3. Verfahren nach Anspruch 2, wobei als Erfassungsmittel (16) ein RFID Chips, ein Barcode, ein 2D-Code oder ein Textfeld verwendet wird.

4. Verfahren nach einem der Ansprüche 2 oder 3, wobei die Identifizierung automatisch durch das Erfassungsmittel (16) oder manuell durch den Bediener vorgenommen wird.

5. Verfahren nach einem der Ansprüche 1 oder 2, **dadurch gekennzeichnet, dass** in dem Magazin (10), bei der ersten Verwendung, auf jeder Position ein leerer Probenbehälter (12) mit Deckel (13) vorgehalten wird.

6. Verfahren nach einem der Ansprüche 1 bis 4, **dadurch gekennzeichnet, dass** jeder Probenbehälter (12) und jeder Deckel (13) vorgewogen ist und dass diese Daten über das Erfassungsmittel (16) ausgelesen werden können.

7. Magazin zum Vorhalten, Transportieren, Verarbeiten und Archivieren von thermoanalytischen Proben, wobei in dem Magazin (10) die Positionen eines jeden Probenbehälters (12) bekannt sind, wobei das Magazin (10) eine Transportsicherung (18) besitzt und wobei das Magazin (10) eine Erfassungsmittel (16) besitzt, **dadurch gekennzeichnet, dass** das Magazin (10) eine Umverpackung (20) besitzt, wobei die Umverpackung (20) dem Magazin (10) zweifelsfrei zuortenbar ist.

8. Magazin (10) nach Anspruch 7, wobei die Umverpackung (20) mit einem Datenverzeichnis (15) der Umverpackung (20) für Probendaten versehen ist.

9. Magazin (10) nach Anspruch 8, wobei das Datenverzeichnis (15) ein Faltbuch, ein 2D-Code, ein Barcode oder ein RFID-Chip ist.

10. Magazin (10) nach einem der Ansprüche 7 oder 8, wobei das Magazin (10) mit der Umverpackung (20) lösbar verbunden ist.

11. Magazin (10) nach einem der Ansprüche 7 bis 10, wobei die lösbare Verbindung zwischen Magazin (10) und Umverpackung (20) als Stecksystem oder als Klebeverbindung ausgestaltet ist.
